# EUROPEAN PATENT APPLICATION

(11) **EP 4 148 871 A1**
(43) Date of publication of application: **15.03.2023**
(21) Application number: 21196570.2
(22) Date of filing: 14.09.2021
(51) Int. Cl.: H01M 10/653, H01M 10/655, H01M 50/229, H01M 50/231

(54) **BATTERY HOUSING AND BATTERY SYSTEM COMPRISING SUCH A HOUSING**

(71) Applicant: Samsung SDI Co., Ltd., Yongin-si, Gyeonggi-do 17084 (KR)
(72) Inventor: Burke, Thomas, 8564 Ligist (AT)
(74) Representative: Gulde & Partner

(57) **Abstract**

The present invention pertains to a battery housing (1) for accommodating a plurality of battery cells of a battery system, comprising a housing frame (20) forming an interior space (25) adapted to accommodate a plurality of battery cells of a battery system, wherein the housing frame (20) comprises side walls (22) embedded in a plastic member (30) comprising an outer plastic layer (32) covering an outer surface of the side walls (22) and an inner plastic layer (34) covering an inner surface of the side walls (22) opposite the outer surface, the battery housing further comprising a thermally insulating layer (36) embedded in the plastic member (30) as well.

## Description

### Field of the Invention

The present invention relates to a battery housing for accommodating a plurality of battery cells of a battery system, a battery system comprising such housing and an electric vehicle comprising such battery system.

### Technological Background

In recent years, vehicles have been developed using electric power as a source of motion. An electric vehicle is an automobile that is powered by an electric motor using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

Rechargeable batteries may be used as a battery module formed of a plurality of unit battery cells coupled in series and/or in parallel so as to provide a high energy density, in particular for motor driving of a hybrid vehicle. A battery module may be formed by interconnecting the electrode terminals of the plurality of unit battery cells depending on a required amount of power and in order to realize a high-power rechargeable battery. The cells can be connected in series, parallel or in a mixture of both to deliver the desired voltage, capacity, or power density. Components of battery packs include the individual battery modules and the interconnects, which provide electrical conductivity between them.

The mechanical integration of such a battery pack, or more general of a battery system, may require appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules, or more general of battery systems, may be achieved by providing a housing or a carrier framework and by positioning the battery modules, or more general the battery system, thereon. Fixing the battery cells or battery modules may be achieved by fitted depressions in the framework or by mechanical interconnectors such as bolts or screws. Alternatively, the battery modules may be confined by fastening side plates to lateral sides of the carrier framework. Further, cover plates may be fixed atop and below the battery modules.

The carrier framework of the battery pack, or more general of the battery system, may be mounted to a carrying structure of the vehicle. In case the battery pack, or more general the battery system, shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art usually comprise a battery housing that serves as enclosure to seal the battery system against the environment and provides structural protection of the battery system components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

A housing for a battery system according to the state of the art is made from either metal or plastic or a combination thereof. These battery housings serve as an enclosure of the battery internals, e.g. the battery cells, electrical contactors, the cooling system, electronic supervision system etc. Furthermore, these battery housings serve to protect the battery system in case of a crash and to facilitate a robust fixation of the battery system components.

Plastic housings offer low part costs but have the disadvantage of rather low mechanical strength and low protection. With a metallic housing comes the risk of having a short circuit during crash, low thermal insulation and rather high costs. Also, an additional corrosion protection has to be implemented. Additional electrical interfaces result in extra complexity in terms of the battery sealing. A combination of a metallic and plastic housing has the disadvantage of insufficient thermal insulation.

It is thus an object of the present invention to overcome or reduce at least some of the drawbacks of the prior art and to provide a battery housing for a battery system that has improved thermal insulation and allows integration of battery system components each by maintaining mechanical robustness.

### Summary of Invention

Embodiments of the present disclosure seek to solve at least one of the problems existing in the prior art to at least some extent.

In particular, a battery housing for accommodating a plurality of battery cells of a battery system is provided. The battery housing comprises a housing frame having an interior space adapted to accommodate a plurality of battery cells of a battery system, the housing frame comprising side walls. The side walls are embedded in a plastic member comprising an outer plastic layer covering an outer surface of the side walls and an inner plastic layer covering an inner surface of the side walls opposite the outer surface. The battery housing further comprises a thermally insulating layer embedded in the plastic member as well.

The battery housing may be a battery housing for e.g. 48V batteries, traction batteries for a hybrid electric vehicle (HEV) or a traction batteries for electric vehicles (EV). According to the invention at least the side walls of the housing frame are embedded in the plastic member, the plastic member thus enclosing the side walls. A bottom wall and/or a top wall, in particular a cap plate, of the housing frame may be embedded in such a plastic member as well. According to the invention not only the side walls of the housing frame but also a thermally insulating layer is embedded in the plastic member, the plastic member thus also enclosing the thermally insulating layer. Thus, the plastic member covers an inner surface and an outer surface of the thermally insulating layer. In other words, the plastic member may comprise a first layer covering the thermally insulating layer on a first side and a second layer covering the thermally insulating layer on a second side opposite the first side. The outer plastic layer and/or the inner plastic layer may have a thickness of e.g. four to eight times the thickness of the side walls of the housing frame. For example, the outer plastic layer and/or the inner plastic layer may have a thickness of 8 mm and the side walls of 1 mm.

The thermally insulating extends along the side walls, in particular in parallel. Also, such a thermally insulating layer may be provided for the top/bottom wall of the housing frame, the thermally insulating layer and the top/bottom wall being embedded in a plastic member as well. Thus, the whole housing frame may be embedded in a plastic member along with a thermally insulating layer so as to be protected from all sides from heat.

The thermally insulating layer protects the battery housing from elevated temperatures which may damage the housing. As the inventors have found, the combined structure of the plastic member and the housing frame may fail at high temperatures, in particular at temperature above 1000°C. Such temperatures may result from a fuel fire, hot venting streams leaving the battery cells disposed in the housing in case of a thermal runaway event, or from arcing between adjacent battery cells. The thermally insulating layer may thus be adapted to resist temperatures of 1000°C and more. In particular, the thermally insulating layer may be adapted to resist temperatures of 1000°C and more for at least 5 minutes to protect the housing for at least such a time period. According to the invention, the thermally insulating layer is, however, not exposed to the outside or the inside of the battery housing but is embedded in the plastic member, as explained. Thus, at least a part of the plastic member, i.e. at least a thin plastic layer, covers the thermally insulating layer with respect to the outside or inside of the battery housing. The plastic member may keep the elements it embeds in form, in particular the thermally insulating layer in a desired position relative to the housing frame. Such a hybrid structure of multiple materials is particularly persistent.

The plastic member may be connected, for example directly connected, to the housing frame, for example bonded. Preferable connections of the plastic member to the frame may be obtained by overmoulding or spraying the housing frame with the plastic member material. The plastic member may form a coating. The plastic member may comprise thermosetting polymers. The plastic member may be formed by Reaction injection molding (RIM), wherein a curing reaction may be provided. With such a RIM the housing frame and the thermally insulating layer may be embedded into the same plastic member.

In general, the thermally insulating layer may be embedded in the outer plastic layer or in the inner plastic layer of the plastic member. Also, multiple thermally insulating layers may be provided, wherein e.g. at least one may be embedded in the outer plastic layer and at least one in the inner plastic layer. According to an embodiment the thermally insulating layer is embedded in the outer plastic layer. Thus, the outer plastic layer encloses the thermally insulating layer such that a first layer of the outer plastic layer covers an outer side of the thermally insulating layer and a second layer of the outer plastic layer covers an inner side of the thermally insulating layer. The thermally insulating layer may in particular be arranged near an outer periphery of the outer plastic layer so that all structural elements of the battery housing are arranged inward of the thermally insulating layer. The thermally insulating layer being embedded in the outer plastic layer allows for the thermally insulating layer to shield the housing frame and any further elements inward of the thermally insulating layer from heat coming from the outside, e.g. because of a fuel fire after a crash. The thermally insulating layer being embedded in the inner plastic layer allows for the thermally insulating layer to shield the housing frame and any further elements outward of the thermally insulating layer from heat coming from the inside, e.g. thermal runaway event of the battery cells enclosed by the battery housing.

According to an embodiment a first thermally insulating layer is embedded in the outer plastic layer and a second thermally insulating layer is embedded in the inner plastic layer. The first thermally insulating layer may be arranged near an outer periphery of the outer plastic layer and the second thermally insulating layer near an outer periphery of the inner plastic layer. This embodiment allows for shielding the housing frame and any further elements arranged in between the two thermally insulating layers against heat from the inside, e.g. due to a thermal runaway of the enclosed battery cells, and against heat from the outside, e.g. because of a fuel fire after a crash.

According to an embodiment the battery housing comprises structural elements embedded in the plastic member as well. The structural elements may be such further elements that are shielded by the thermally insulating layer(s) along with the housing frame mentioned above. The structural elements may be part of the housing frame. Such structural elements may contribute to the stability of the battery housing and are preferably shielded by the thermally insulating layer as well. According to a respective embodiment the structural elements are embedded in the outer plastic layer. In particular, the structural elements may be arranged between the thermally insulating layer and the side walls of the housing frame, the thermally insulating layer being arranged in the outer plastic layer as well. This way the thermally insulating layer may shield the structural elements and the side walls from heat coming from the outside.

According to an embodiment the side wall is a metallic wall. In particular, the side wall may be made of steel or aluminum. The side wall and the plastic member may form a combination of a metallic and plastic housing frame. The plastic member may provide additional stability so that the housing frame can have a lesser thickness than housing frames without such plastic members. This may save costs as the metallic material is usually more expensive than the material of the plastic member. The plastic member in this case preferably also serves as an electrical insulation to shield the electrically conducting housing frame from the battery cells and/or from the outside.

According to an embodiment the plastic member comprises a plastic foam, in particular a polyurethane foam. Also, the plastic member may consist of such a foam. The plastic foam may be applied e.g. via Reaction Injection Moulding (RIM) so as to encompass the housing frame and the thermally insulating layer. The plastic foam may be cured after having been applied to assume a higher density and thus stability.

According to an embodiment the thermally insulating layer comprises a fabric. The fabric may comprise or consist of ceramic and/or glass fibers. In particular, the thermally insulating layer may comprise a fabric and a resin, the fabric in combination with the resin forming the thermally insulating layer after curing. Such a thermally insulating layer may be particular heat resistant, in particular up to 1000°C and more.

According to an embodiment the battery housing comprises a cap plate as a top wall of the housing frame, and a plastic member embedding the top wall along with a thermally insulating layer. Thus, the cap plate as part of the housing frame may also be embedded in a plastic member along with a thermally insulating layer so that the thermally insulating layer may shield the cap plate from heat coming from the inside and/or outside of the battery housing, depending on the arrangement of the thermally insulating layer. For example, the thermally insulating layer may be arranged inwards of the top wall/cap plate to protect against a thermal runaway of the enclosed battery cells.

According to an embodiment the battery housing comprises an air layer arranged adjacent the thermally insulating layer between the thermally insulating layer and the side walls, in particular in direct contact with the thermally insulating layer. Such an air layer may further enhance the thermal insulation. Such an air layer may be provided in a factory setting of the battery housing or may be formed later. In particular, such an air layer may form due to the thermally insulating layer being subjected to sufficient heat. Thus, according to an embodiment, the thermally insulating layer may be adapted to form such an air layer when exposed to sufficient heat. For example, the thermally insulating layer may be adapted to expand when exposed to sufficient heat, i.e. when a predetermined temperature is reached or exceeded. Also, the thermally insulating layer may be adapted to detach from the plastic member in such a case thereby forming an air layer within the plastic member. This may be achieved by the thermally insulating layer comprising a fabric as explained above.

According to an embodiment the plastic member also serves as an electrical insulation. This may be achieved as the plastic member comprises or consists of a plastic material which is electrically insulating, for example polyurethane foam as explained above. This way the housing frame may be shielded against electrical currents from the outside and/or inside, in particular from the battery cells. This is useful if the housing frame is a metallic one or comprises metal.

The invention also pertains to a battery system comprising a battery housing as explained above, wherein a plurality of battery cells are accommodated in the battery housing. The battery cells are then arranged in the interior space of the housing frame. The battery cells may stand on a bottom wall of the housing frame. In particular, the battery cells may be positioned in contact with a cooling plate arranged at a bottom of the housing frame or forming the bottom of the housing frame. The cooling plate may be part of the battery housing.

The invention also pertains to an electrical vehicle comprising a battery system as explained above. The electric vehicle may be an HEV or EV. The battery system may serve as a traction battery of the electric vehicle.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of a battery housing according to an embodiment of the invention;
- Fig. 2: is a cross-sectional view taken along line II-II of Fig. 1; and
- Fig. 3: illustrates in part a cross sectional view of a battery housing according to an embodiment of the present invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete and will fully convey the aspects and features of the present invention to those skilled in the art. Accordingly, processes, elements, and techniques that are not necessary to those having ordinary skill in the art for a complete understanding of the aspects and features of the present invention may not be described.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that when an element or coating is referred to as being "on," "connected to," or "coupled to" another element or coating, it can be directly on, connected to, or coupled to the other element or coating, or one or more intervening elements or coatings may be present. In addition, it will also be understood that when an element or coating is referred to as being "between" two elements or coatings, it can be the only element or coating between the two elements or coatings, or one or more intervening elements or coatings may also be present.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

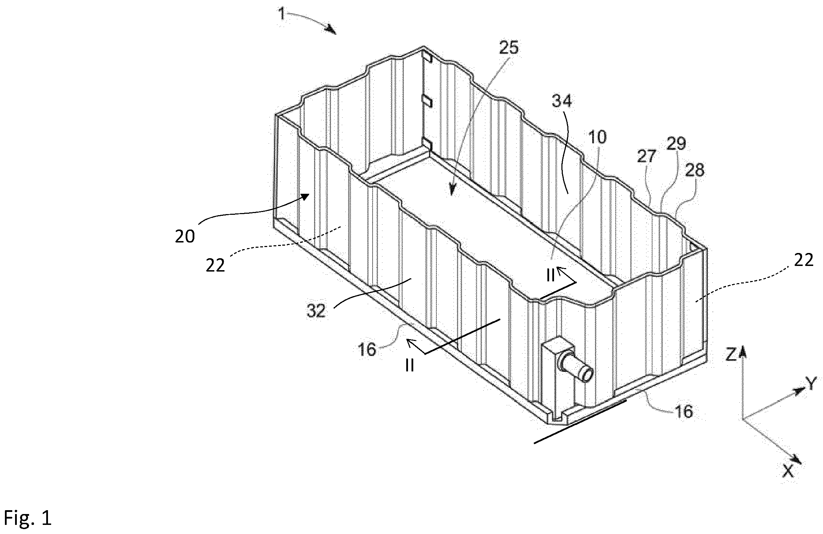

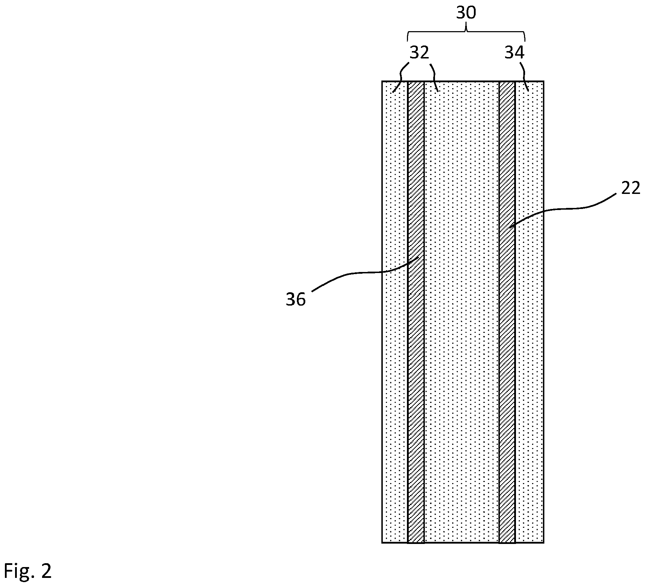

In Fig. 1 a battery housing 1 according to the invention is shown, the battery housing 1 comprising a housing frame 20 having an interior space 25 adapted to accommodate a plurality of battery cells (not shown) of a battery system. The housing frame 20 is of a rectangular shape and comprises four side walls 22 each embedded in a plastic member 30 comprising an outer plastic layer 32 covering an outer surface of the side walls 22 and an inner plastic layer 34 covering an inner surface of the side walls 22 opposite the outer surface, see also Fig. 2.

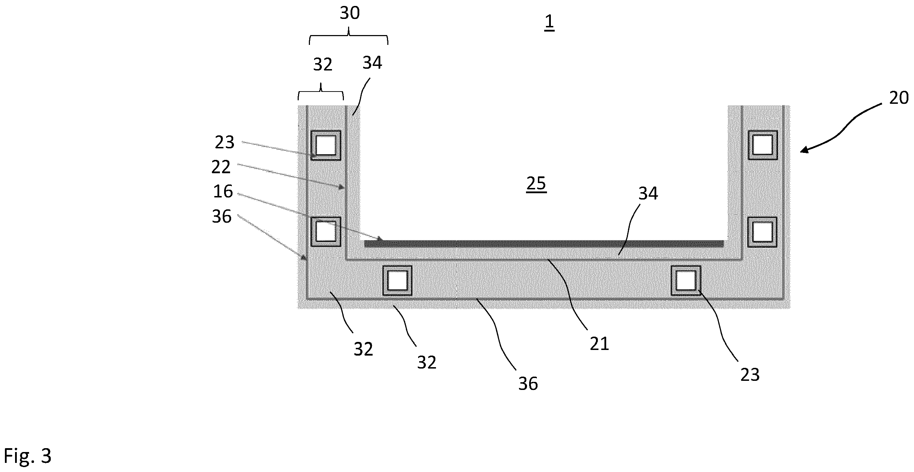

The side walls 22 of the housing frame 20 may comprise a plurality of alternatively arranged indented parts 27 and protruding parts 28 as shown in Fig. 1. These parts may be smoothly connected by connecting parts 29, for example curved parts. In other embodiments, the side walls 22 of the housing frame 20 may be flat, see Fig. 3. At a bottom 10 of the housing frame 20 a cooling plate 16 is arranged for cooling battery cells (not shown) to be arranged on the cooling plate 16. The cooling plate 16 may form a bottom wall of the housing frame as in Fig. 1. Alternatively, the cooling plate 16 may be arranged above a bottom wall 21 of housing frame 20 as shown in Fig. 3.

As can be seen in Figs. 2 and 3, the battery housing 1 further comprises a thermally insulating layer 36 which is also embedded in the plastic member 30. More precisely, the thermally insulating layer 36 is embedded in the outer plastic layer 32. The battery housing 1 of Fig. 3 also comprises multiple structural elements 23 which are embedded in the outer plastic layer 32 as well. The structural elements 23 may provide further stability to the battery housing 1 but they are merely optional and may be omitted.

The thermally insulating layer 36 is arranged at a periphery of the outer plastic layer 32 but is still covered by the outer plastic layer 32 with respect to the outside as can be seen in the figures. The thermally insulating layer 36 comprises a fabric of ceramic and/or glass fibers which are preferably cured in a resin. The thermally insulating layer 36 shields the side walls 22 and the structural elements 23 from heat coming from outside of the battery housing 1, e.g. because of a fire resulting from a crash of the electric vehicles (EV) carrying the battery housing 1 as part of its battery system. Any battery cells arranged in the interior space 25 are thus protected from said heat.

As can be seen in Fig. 3, not only the side walls 22 but also the bottom wall 21 is embedded in the outer plastic layer 32 along with the thermally insulating layer 36 which extends also along the bottom of the housing frame 20. Thus, the bottom wall 21 of the housing frame 20 is shielded as well.

A further thermally insulating layer (not shown) may be provided embedded in the inner plastic layer 34, i.e. inwards of the side walls 22 and the structural elements 23, to protect the side walls 22 and the structural elements 23 from heat coming from the inside of the battery housing 1, e.g. because of a thermal runaway event happening in one or more of the battery cells.

Thus, the thermally insulating layer contributes to the safety of the battery housing/system. The thermally insulating layer may withstand temperatures of 1000°C or more for at least 5 minutes. The thermally insulating layer being embedded in the plastic member allows for a particular stable and persistent structure. The battery housing can be manufactured via Reaction injection molding of the plastic material the plastic member is comprised of, in particular a PU foam, such that the housing frame and the thermally insulating layer as well as the structural elements are embedded into the plastic member.

### Reference signs

- 1: battery housing
- 10: bottom of housing frame
- 16: cooling plate
- 20: housing frame
- 21: bottom wall
- 22: side walls
- 23: structural elements
- 25: interior space
- 27: indented parts
- 28: protruding parts
- 29: connecting parts
- 30: plastic member
- 32: outer plastic layer
- 34: inner plastic layer
- 36: thermally insulating layer

## Claims

1. A battery housing (1) for accommodating a plurality of battery cells of a battery system, comprising a housing frame (20) having an interior space (25) adapted to accommodate a plurality of battery cells of a battery system, wherein the housing frame (20) comprises side walls (22) embedded in a plastic member (30) comprising an outer plastic layer (32) covering an outer surface of the side walls (22) and an inner plastic layer (34) covering an inner surface of the side walls (22) opposite the outer surface, the battery housing further comprising a thermally insulating layer (36) embedded in the plastic member (30) as well.

2. The battery housing (1) of claim 1, wherein the thermally insulating layer (36) is embedded in the outer plastic layer (32), in particular near an outer periphery of the outer plastic layer (32).

3. The battery housing (1) of one of the claims 1 to 2, wherein a first thermally insulating layer is embedded in the outer plastic layer (32) and a second thermally insulating layer is embedded in the inner plastic layer (34).

4. The battery housing (1) of one of the preceding claims, wherein the battery housing (1) comprises structural elements (23) embedded in the plastic member (30) as well.

5. The battery housing (1) of claim 4, wherein the structural elements (23) are embedded in the outer plastic layer (32), in particular between the thermally insulating layer (36) and the side wall (22) of the housing frame (20).

6. The battery housing (1) of one of the preceding claims, wherein the side wall (22) is a metallic side wall, in particular made of steel or aluminum.

7. The battery housing (1) of one of the preceding claims, wherein the plastic member (30) comprises or consists of a polyurethane foam.

8. The battery housing (1) of one of the preceding claims, wherein the thermally insulating layer (36) comprises a fabric, in particular a fabric comprising ceramic and/or glass fibers.

9. The battery housing (1) of one of the preceding claims, wherein the battery housing (1) comprises a cap plate as a top wall of the of the housing frame (20), the cap plate being embedded in a plastic member along with a thermally insulating layer.

10. The battery housing (1) of one of the preceding claims, wherein the battery housing (1) comprises an air layer arranged adjacent the thermally insulating layer (36) between the thermally insulating layer (36) and the side walls (22).

11. The battery housing (1) of claim 10, wherein the thermally insulating layer (36) is adapted to form such an air layer when subjected to sufficient heat.

12. The battery housing (1) of one of the preceding claims, wherein the thermally insulating layer (36) also serves as an electrical insulation.

13. A battery system comprising a battery housing (1) according to one of claims 1 to 11 with a plurality of battery cells accommodated therein.

14. The battery system of claim 13, wherein the battery cells are positioned in contact with a cooling plate (16).

15. An electrical vehicle comprising a battery system according to one of claims 13 to 14.

## Amended claims

### Amended claims in accordance with Rule 137(2) EPC.

1. A battery housing (1) for accommodating a plurality of battery cells of a battery system, comprising a housing frame (20) having an interior space (25) adapted to accommodate a plurality of battery cells of a battery system, wherein the housing frame (20) comprises side walls (22) embedded in a plastic member (30) comprising an outer plastic layer (32) covering an outer surface of the side walls (22) and an inner plastic layer (34) covering an inner surface of the side walls (22) opposite the outer surface, the battery housing further comprising a thermally insulating layer (36) embedded in the plastic member (30) as well.

2. The battery housing (1) of claim 1, wherein the outer plastic layer (32) and/or the inner plastic layer (34) has a thickness of four to eight times the thickness of the side walls (22) of the housing frame (20).

3. The battery housing (1) of claim 1 or 2, wherein the thermally insulating layer (36) is embedded in the outer plastic layer (32), in particular near an outer periphery of the outer plastic layer (32).

4. The battery housing (1) of one of the preceding claims, wherein a first thermally insulating layer is embedded in the outer plastic layer (32) and a second thermally insulating layer is embedded in the inner plastic layer (34).

5. The battery housing (1) of one of the preceding claims, wherein the battery housing (1) comprises structural elements (23) embedded in the plastic member (30) as well.

6. The battery housing (1) of claim 5, wherein the structural elements (23) are embedded in the outer plastic layer (32), in particular between the thermally insulating layer (36) and the side wall (22) of the housing frame (20).

7. The battery housing (1) of one of the preceding claims, wherein the side wall (22) is a metallic side wall, in particular made of steel or aluminum.

8. The battery housing (1) of one of the preceding claims, wherein the plastic member (30) comprises or consists of a polyurethane foam.

9. The battery housing (1) of one of the preceding claims, wherein the thermally insulating layer (36) comprises a fabric, in particular a fabric comprising ceramic and/or glass fibers.

10. The battery housing (1) of one of the preceding claims, wherein the battery housing (1) comprises a cap plate as a top wall of the of the housing frame (20), the cap plate being embedded in a plastic member along with a thermally insulating layer.

11. The battery housing (1) of one of the preceding claims, wherein the battery housing (1) comprises an air layer arranged adjacent the thermally insulating layer (36) between the thermally insulating layer (36) and the side walls (22).

12. The battery housing (1) of claim 11, wherein the thermally insulating layer (36) is adapted to form such an air layer when subjected to sufficient heat.

13. The battery housing (1) of one of the preceding claims, wherein the thermally insulating layer (36) also serves as an electrical insulation.

14. A battery system comprising a battery housing (1) according to one of claims 1 to 13 with a plurality of battery cells accommodated therein.

15. The battery system of claim 14, wherein the battery cells are positioned in contact with a cooling plate (16).

16. An electrical vehicle comprising a battery system according to one of claims 14 to 15.
